# EUROPEAN PATENT SPECIFICATION

(11) **EP 0 520 329 B1**
(45) Date of publication and mention of the grant of the patent: **02.11.1994**
(21) Application number: 92110365.1
(22) Date of filing: 19.06.1992
(51) Int. Cl.: A01G 25/09

(54) **Water-cannon irrigation device**
Bewässerungskanone
Canon d'eau irrigateur

(30) Priority: 24.06.1991 IT MN910016
(43) Date of publication of application: 30.12.1992
(73) Proprietor: Veronesi, Bruno, I-46030 Sustinente (Mantova) (IT)
(72) Inventor: Veronesi, Bruno, I-46030 Sustinente (Mantova) (IT)
(74) Representative: Modiano, Guido, Dr.-Ing.

(56) References cited:
- EP-A- 0 357 152
- FR-A- 2 420 294
- FR-A- 2 467 543
- US-A- 2 726 895
- US-A- 3 556 406
- US-A- 3 726 478
- US-A- 4 109 747
- US-A- 4 352 460

## Description

The invention relates to a water-cannon irrigation device, such as described in the preamble of claim 1 and known from US-A-3556406.

Water-cannon irrigation is currently still widely performed by connecting a unit for delivering a supply of water to a water cannon, to the power take-off of a tractor or a trailer-mounted motorized unit. The unit is then moved from one point to another along the irrigation waterways which are present in the fields, so as to progressively irrigate all of the cultivated land.

However, this irrigation method requires frequent operator intervention and is therefore increasingly less accepted in view of the decrease in labor assigned to agriculture.

An improvement has been achieved with irrigation devices employing reels of flexible hose which supply water to a trailer-mounted cannon. The hose is progressively coiled onto a large reel by moving said trailer and consequently irrigating a strip of soil which is substantially as long as the flexible hose. Said reel is supported by a chassis which must be progressively moved in order to serve new strips of soil each time, and it is indeed during operations for progressive transfer and positioning that one of the disadvantageous characteristics of this device becomes evident due to the excessive down-time that these operations entail.

Other disadvantageous characteristics of the reel system include the fact that the crops are trampled on and the water undergoes considerable load losses, with a consequent demand for high installed power.

The aim of the present invention is to overcome the problems encountered in the use of the prior art water-cannon irrigation devices.

Within this aim, an object of the invention is to provide a device for water-cannon irrigation which is capable of irrigating strips of soil in the absence of an operator and without trampling on the crops.

Another object of the invention is to provide a water-cannon irrigation device which can be transferred easily from one area to another.

Another object of the invention is to provide a device which is highly flexible in use, so as to be able to minimize the regions to be left uncultivated in order to allow its transit, and wherein the cannon supply water encounters minimal load losses.

This aim and the specified object are achieved by a device for water-cannon irrigation as defined in the appended claims.

Further characteristics and advantages will become apparent from the description of some preferred but not exclusive embodiments of the invention, illustrated only by way of non-limitative example in the accompanying drawings, wherein:
figure 1 is a perspective view of the invention during the operation of the water cannon;
figure 2 is a schematic view of the hydraulic circuit for actuating the cylinders of the steering device;
figures 3 to 4 are schematic views of other embodiments of the invention.

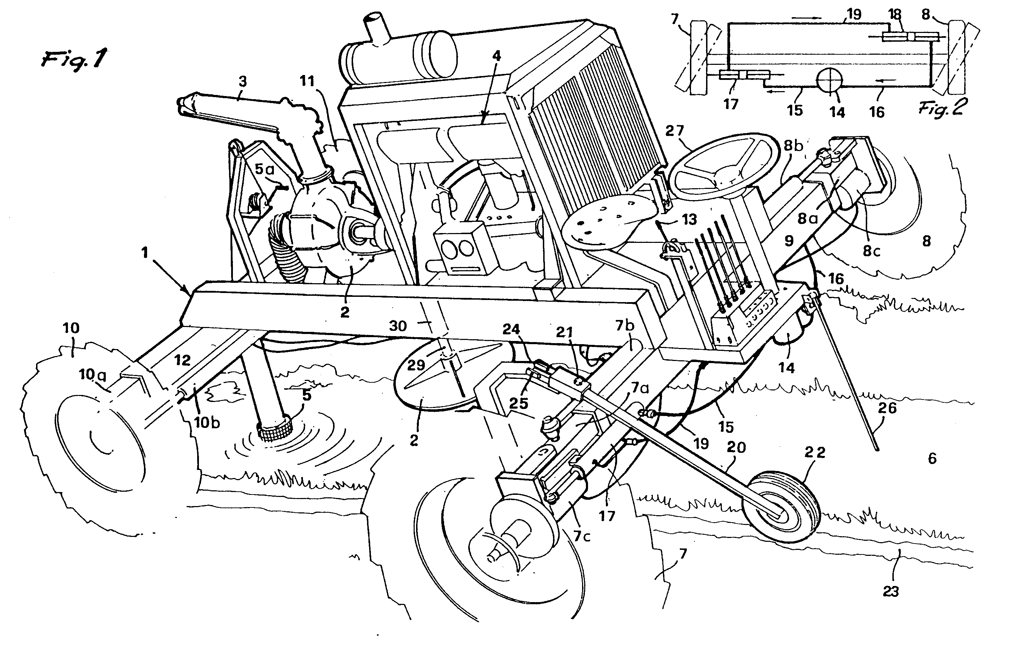

With reference to the above figures 1 and 2, the reference numeral 1 generally designates the chassis for supporting the suction pump or unit 2 for drawing the water for feeding the water cannon 3, which is motorized by means of the internal-combustion engine 4 and is provided with a water intake or suction element 5, which is shown partially immersed in the waterway 6 in the figure.

Said suction element 5 can be raised in a known manner by actuating a crank 5a for winding a cable having an end connected to the suction element 5. In this way, the element 5 can be arranged in a raised position in order to allow the water-cannon irrigation device to be moved from one waterway to another. According to another embodiment, the element 5 can be provided with means for lowering it into a waterway in different positions with respect to the chassis: thus, for example, the chassis can be moved along a turning strip located to the right hand side of a waterway with respect to the direction of advancement of the water-cannon irrigation device, and in this case the suction element would be lowered on the outside of the left side of said chassis.

The chassis 1 is provided with wheels 7,8,10,11 for moving the unit 2 along the waterway 6 during the operation of the water cannon 3. The wheels are provided with means for adjusting the gauge value or width of the wheel base of the front and rear pairs of wheels. Thus, the front wheels 7 and 8 are supported by the axle 9, which is provided with telescopic elements 7a and 8a actuated by means of hydraulic cylinders 7b and 8b, and the rear wheels 10 and 11 are supported by the axle 12, which is also equipped with telescopic elements, such as the element 10a for the wheel 10, which are actuated by cylinders such as the cylinder 10b.

Advantageously, the front wheels 7 and 8 are the driving wheels which are powered to move the water-cannon irrigation device during operation and transfer between waterways.

The wheels 7,8 are connected respectively to hydraulic motors 7c and 8c, and the speed of motion can be adjusted by means of a speed control unit connected to lever means such as the lever 13. Advantageously, the lever 13, is provided with position selection means so that it may be locked in the required position, whereby to maintain the most appropriate speed of the water-cannon irrigation device along the waterway. The speed control unit comprises a programmable control unit mounted on the chassis so as to impart to the device, during its motion, the motion criterion deemed most appropriate in order to optimize water cannon irrigation.

Motorization of the wheels may be provided in any suitable manner and all four wheels may be driven.

The front wheels 7 and 8 are provided with a steering device which will now be described in detail.

Said device comprises the hydraulic power steering unit 14, from which the ducts 15 and 16 branch and respectively reach, as shown in figure 2, a chamber of the hydraulic cylinders 17 and 18, which rotate the wheels 7 and 8 respectively; the other chambers of said cylinders are connected by the duct 19.

When it is necessary, for example, to steer the wheels and move them into the position shown in dot-and-dash lines in figure 2, the oil follows the path of the arrows of said figure, which does not seem to require further comment.

Control actuations reach the hydraulic power steering unit 14 of the steering device in two distinct manners.

When the device moves along the waterway 6 while the water cannon 3 is operating, irrigating the two strips of soil which are adjacent to said waterway, there is no operator on board and the guidance of the device is automatic.

For this purpose, means are provided which comprise an arm 20 pivoted at 21 to a wing of the chassis 1; said arm 20 is provided at one end with the wheel 22, which remains housed, during the movement of the device, inside the groove 23 which is parallel to the waterway; said arm furthermore selectively contacts, at its other end, sensors 24 and 25 which transmit signals to the hydraulic power steering unit 14.

When the device reaches the end of the waterway 6, automatic motion stops due to the command issued by the stroke limit sensor 26, and the device must be transferred to work at a different waterway.

In this case the device covers the transfer route in a self-propelled manner, using said wheels 7, 8, 10 and 11 described earlier, and guided by an onboard operator who uses the steering wheel 27 which is connected to the hydraulic power steering unit 14.

Obviously, during said transfer route the front wheels 7 and 8 and the rear wheels 10 and 11 can be a hindrance if they are kept in the maximum-gauge condition which has allowed movement while resting on the two banks of the waterway 6, astride the waterway itself, but in this case it is possible to use the telescopic elements of the axles 9 and 12, causing them to retract and consequently drastically reducing said gauge.

This operation can be performed easily by first lifting the device until the wheels are no longer in contact with the ground, naturally after leaving the banks of the waterway 6, and in order to do this one uses the lifting unit, which comprises the plate 28 keyed on the stem 29 actuated by the actuation cylinder 30, which is located in a barycentric position.

Since the plate 28 is keyed so as to be able to rotate about the stem 29, it is possible to use this unit also to change the direction of the device and facilitate its positioning.

From all of the above it is easy to deduce that the device is very easy to position at the various waterways which are always present in cultivated fields designed for water-cannon irrigation, and that said device is highly flexible in use.

It should also be stressed that said device operates without damaging the crops and with minimal load losses in the cannon supply water.

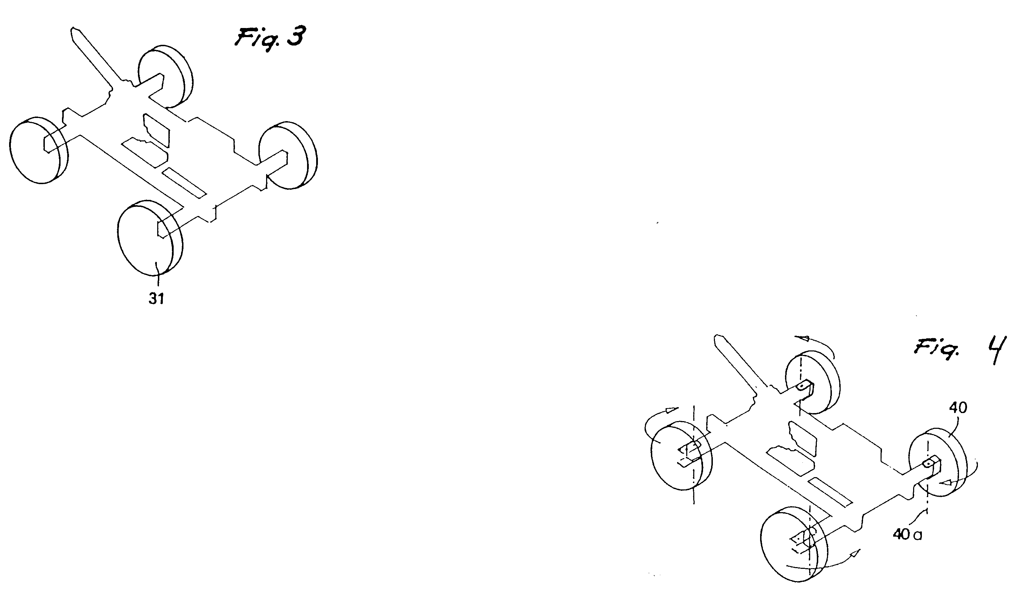

Figure 3 is a view of an embodiment which differs from the solution of figure 1 only in that the wheels, such as 31, are supported by fixed axles.

Finally, the embodiment of figure 4 has four wheels 40 which are supported by axle shafts which are rotatable through an angle substantially equal to a right angle about a vertical axis 40a, so as to move from the minimum-gauge condition shown in the figure to a maximum-gauge position.

## Claims

1. Water cannon irrigation device comprising a chassis (1) having a motorized wheels (7, 8, 10, 11, 31, 40) for moving along a waterway (6) and supporting a water cannon (3), a motorized unit (2) for delivering water to said cannon (3) during operation of the water-cannon (3), a water intake suction element (5) for immersion in water and being connected to said motorized unit (2), automatic chassis guidance means (14, 20, 22, 24, 25, 26) provided onboard said chassis, and means (5a) for raising said suction element (5) during transfer of said device from one waterway (6) to another, characterized in that it comprises a lifting unit (28-30) for lifting said chassis (1) and in that said lifting unit (28-30) comprises a barycentric lifting unit (28-30) for simultaneously lifting all of said wheels (7, 8, 10, 11) above the ground, said barycentric lifting unit comprising a cylinder (30) arranged in a barycentric position with respect to said chassis (1) and having a stem (29), and a ground contacting plate (28) rotatably keyed to the lower end of said stem (29) for positioning and changing the direction of said water cannon irrigation device.

2. Water cannon irrigation device according to claim 1 further comprising telescopic means (7a, 8a, 7b, 8, 9, 10a, 10b, 12) for adjusting the gauge of said wheels (7, 8, 10, 11).

3. Water cannon irrigation device according to claim 1 characterized in that said wheels (31) are supported by fixed axles.

4. Water cannon irrigation device according to claim 1 characterized in that said wheels (40) are supported by axle shafts which are rotatable about a vertical axis.

5. Water cannon irrigation device according to claims 1 and 2, characterized in that said telescopic means (7a, 8a, 7b, 8, 9, 10a, 10b, 12) comprise axles (9, 12), each provided with telescopic elements (7a, 8a, 10a) actuated by hydraulic cylinders (7b, 8b, 10b), and in that said wheels (7, 8, 9, 10) include at least two wheels (7, 8) connected to hydraulic motors (7c, 8c).

6. Water cannon irrigation device according to claim 1, characterized in that said automatic chassis guidance means (14, 20, 22, 24, 25, 26) comprise a powered steering unit (14) connected to at least two (7, 8) of said wheels (7, 8, 10, 11), an arm (20) pivotally connected to said chassis (1), a wheel (22) rotatably connected to one end of said arm (20) for engaging guide means (23) extending parallel to a waterway (6), and sensors (24, 25) selectively contacted by an opposite end of said arm (20) and transmitting signals to said powered steering unit (14).

7. Water cannon irrigation device according to claim 6, wherein said automatic chassis guidance means (14, 20, 22, 24, 25, 26) further comprise a stroke limit sensor (26) having means for issuing an automatic motion stop command upon reaching the end of a waterway (6).

8. Water cannon irrigation device according to claim 1, characterized in that it comprises means (5a) for lowering said water intake suction element (5) into a waterway (6) in different positions with respect to said chassis (1).

## Patentansprüche

1. Bewässerungskanone, die versehen ist mit einem Fahrgestell (1), das mit antreibbaren Rädern (7, 8, 10, 11; 31; 40) ausgerüstet ist, mittels dar die Bewässerungskanone entlang einem Bewässerungskanal (6) bewegbar ist, und das einen Wasserwerfer (3) trägt, mit einer motorgetriebenen Pumpeneinheit (2), mittels der der Wasserwerfer (3) während des Bewässerungsbetriebes mit Wasser versorgbar ist, mit einem Wasseransaugelement (5), das in einen Bewässerungskanal (6) absenkbar ist und das mit dar motorgetriebenen Pumpeneinheit (2) in Verbindung steht, mit einer automatischan Lenkvorrichtung (14, 20, 22, 24, 25, 26) für das Fahrgestell (1), die auf dem Fahrgestell (1) angeordnet ist, und mit einer Hubvorrichtung (5a), mittels der während eines Ortswechsels der Bewässerungskanone von einem Bewässerungskanal (6) zu einem anderen das Wasseransaugelement (5) anhebbar ist, und die gekennzeichnet ist durch eine Hubvorrichtung (28 ... 30), mittels der das Fahrgestell (1) und gleichzeitig alle vier Räder über Bodenhöhe anhebbar sind, die in der vertikalen Schwerachse angeordnet ist, die einen Zylinder (30) aufweist, der in der vertikalen Schwerachse angeordnet ist, die einen Schaft (29) aufweist und die eine Grundplatte (28) aufweist, die mit dem unteren Ende des Schaftes (29) derart drehbar verbunden ist, daß die Ausrichtung der Bewässerungskanone einstellbar ist und veränderbar ist.

2. Bewässerungskanone nach Anspruch 1, die außerdem Teleskopiervorrichtungen (7a, 8a, 7b, 8, 9, 10a, 10b, 12) zum Einstellen der Spurweite der Räder (7, 8, 10, 11) aufweist.

3. Bewässerungskanone nach Anspruch 1, dadurch gekennzeichnet, daß die Räder (31) an starren Achsen angeordnet sind.

4. Bewässerungskanone nach Anspruch 1, dadurch gekennzeichnet, daß die Räder (40) an Achsschenkeln angeordnet sind, die um eine vertikale Achse schwenkbar sind.

5. Bewässerungskanone nach Anspruch 1 und 2, daß die Teleskopiervorrichtungen (7a, 8a, 7b, 8, 9, 10a, 10b, 12) Achsen (9, 10) aufweisen, die mit Teleskopierelementen (7a, 8a, 10a) ausgerüstet sind, die durch Hydraulikzylinder (7b, 8b, 10b) betätigbar sind, und dadurch, daß von den vorhandenen Rädern (7, 8, 10, 11) wenigsten zwei Räder (7, 8) mit einem Hydraulikmotor (7c, 8c) gekoppelt sind.

6. Bewässerungskanone nach Anspruch 1, dadurch gekennzeichnet, daß die automatische Lenkvorrichtung (10, 20, 22, 24, 25, 26) für das Fahrgestell (1) versehen ist mit einer mit Energie versorgten Steuervorrichtung (14), die mit wenigstens zwei (7, 8) der vorhandenen Räder (7, 8, 10, 11) gekoppelt ist, mit einem Arm (20), der mit dem Fahrgestell (1) schwenkbar verbunden ist, mit einem Rad (22), die mit dem unteren Ende des Armes (22) drehbar verbunden ist zum Eingreifen in Führungselemente (23), die sich längs eines Bewässerungskanals (6) erstrecken, und mit Sensoren (24, 25), die einzeln durch das entgegengesetzte Ende des Armes (22) aktivierbar sind, um Steuersignale an der Steuervorrichtung abzugeben.

7. Bewässerungskanone nach Anspruch 6, dadurch gekennzeichnet, daß die automatische Lenkvorrichtung (10, 20, 22, 24, 25, 26) einen Wegendesensor (26) aufweist, mittels dessen beim Erreichen des Endes eines Bewässerungskanals (6) ein Haltsignal für das automatische Anhalten der Bewässerungskanone erzeugbar ist.

8. Bewässerungskanone nach Anspruch 1, dadurch gekennzeichnet, daß sie eine Vorrichtung (50) aufweist, mittels der das Wasseransaugelement (5) auf verschiedene Höhenstellungen in Bezug auf das Fahrgestell (1) in einen Bewässerungskanal (6) absenkbar ist.

## Revendications

1. Dispositif d'irrigation à canon à eau comprenant un châssis (1) dont les roues (7, 8, 10, 11, 31, 40) sont commandées par moteur pour son déplacement le long d'un canal d'irrigation (6), et portant un canon à eau (3), une unité à moteur (2) pour fournir de l'eau audit canon (3) pendant le fonctionnement du canon à eau (3), un élément d'admission d'eau par aspiration (5), destiné à être plongé dans l'eau et qui est relié à ladite unité à moteur (2), des moyens (14, 20, 22, 24, 25, 26) de pilotage automatique du châssis prévus à bord dudit châssis, et des moyens (5a) pour relever ledit élément d'aspiration (5) pendant le transfert dudit dispositif d'un canal (6) à un autre, caractérisé en ce qu'il comprend une unité de relevage (28-30) pour relever ledit châssis (1), et en ce que ladite unité de relevage (28-30) comprend une unité de relevage barycentrique (28-30) pour relever simultanément toutes lesdites roues (7, 8, 10, 11) au-dessus du sol, ladite unité de relevage barycentrique comprenant un vérin (30) disposé dans une position barycentrique par rapport audit châssis (1) et ayant une tige (29) et un plateau (28) en contact avec le sol, claveté de manière à tourner, sur l'extrémité inférieure de ladite tige (29) pour positionner et pour modifier la direction dudit dispositif d'irrigation à canon à eau.

2. Dispositif d'irrigation à canon à eau selon la revendication 1, comprenant en outre des moyens télescopiques (7a, 8a, 8, 9, 10a, 10b, 12) pour régler la cote d'écartement desdites roues (7, 8, 10, 11).

3. Dispositif d'irrigation à canon à eau selon la revendication 1, caractérisé en ce que lesdites roues (31) sont soutenues par des essieux fixes.

4. Dispositif d'irrigation à canon à eau selon la revendication 1, caractérisé en ce que lesdites roues (40) sont soutenues par des arbres d'essieu qui peuvent tourner autour d'un axe vertical.

5. Dispositif d'irrigation à canon à eau selon les revendications 1 et 2, caractérisé en ce que lesdits moyens télescopiques (7a, 8a, 7b, 8, 9, 10a, 10b, 12) comprennent des essieux (9, 12) pourvus chacun d'éléments télescopiques (7a, 8a, 10a) actionnés par des vérins hydrauliques (7b, 8b, 10b) et en ce que lesdites roues (7, 8, 9, 10) comprennent au moins deux roues (7, 8) reliées à des moteurs hydrauliques (7c, 8c).

6. Dispositif d'irrigation à canon à eau selon la revendication 1, caractérisé en ce que lesdits moyens (14, 20, 22, 24, 25, 26) de pilotage automatique de châssis comprennent une unité de direction à moteur (14), reliée à au moins deux (7, 8) desdites roues (7, 8, 10, 11), un bras (20) monté à pivotement sur ledit châssis (1), une roue (22) reliée, de manière à pivoter, à une extrémité dudit bras (20) pour venir en contact avec des moyens de guidage (23) s'étendant parallèlement à un canal (6), et des capteurs (24, 25), avec lesquels vient sélectivement en contact une extrémité opposée dudit bras (20), et qui fournissent des signaux à ladite unité de direction à moteur (14).

7. Dispositif d'irrigation à canon à eau selon la revendication 6, dans lequel lesdits moyens de pilotage automatique du châssis (14, 20, 22, 24, 25, 26) comprennent en outre un détecteur de fin de course (26) pourvu de moyens d'émission d'une instruction d'arrêt de déplacement automatique lorsque l'extrémité d'un canal (6) est atteinte.

8. Dispositif d'irrigation à canon à eau selon la revendication 1, caractérisé en ce qu'il comprend des moyens (5a) pour faire descendre ledit élément d'admission d'eau par aspiration (5) dans un canal (6), dans des positions différentes par rapport audit châssis (1).
